# EUROPEAN PATENT APPLICATION

(11) **EP 2 827 437 A1**
(43) Date of publication of application: **21.01.2015**
(21) Application number: 13761628.0
(22) Date of filing: 01.03.2013
(51) Int. Cl.: H01M 12/06, H01M 4/46

(54) **FUEL ELEMENT FOR MAGNESIUM-AIR BATTERY, MAGNESIUM-AIR BATTERY, PRODUCTION METHOD FOR FUEL ELEMENT FOR MAGNESIUM-AIR BATTERY, MAGNESIUM-AIR BATTERY SYSTEM, AND USE METHOD FOR MAGNESIUM-AIR BATTERY SYSTEM**

(30) Priority: 16.03.2012 JP 2012061089
(71) Applicant: YTS SCIENCE PROPERTIES PTE.LTD., Singapore 079903 (SG)
(72) Inventor: YABE, Takashi, Tokyo 114-0013 (JP)
(74) Representative: Jones, Helen M.M.
(86) International application number: PCT/JP2013/055683
(87) International publication number: WO 2013/137026

(57) **Abstract**

A magnesium-air battery system (200) comprises a supplier (210), a battery body (220), a wind-up reel (230) and a driver (240). A magnesium-air battery fuel element (100) is formed from a magnesium film into a roll shape. The supplier (210) is connected to the magnesium-air battery fuel element (100) and is rotationally driven by the driver (240) such that the magnesium-air battery fuel element (100) is delivered to the wind-up reel (230) via the battery body (220). The battery body (220) comprises an anode and an electrolyte and uses the magnesium-air battery fuel element (100) as a cathode acting in synergy with the anode to generate electricity. The wind-up reel (230) winds up the post-reaction magnesium-air battery fuel element that is used to generate electricity in the battery body (220), and forms a used fuel element (500) having a roll shape removable from the wind-up reel (230).

## Description

### Technical Field

The present disclosure relates to a fuel element for a magnesium-air battery, a magnesium-air battery, a method for producing a fuel element for a magnesium-air battery, a magnesium-air battery system, and a use method for a magnesium-air battery system, in which air is used as an anode active material and magnesium is used as a cathode active material.

### Background Art

A fuel element using air as an anode active material and magnesium as a cathode active material employed in a magnesium-air battery is disclosed, for example, in Patent Literature 1 as cassette-type fuel elements. In detail, the fuel elements of Patent Literature 1 include a magnesium thin film and that each edge of the magnesium thin film is connected to a pair of reels, therefore, by turning the reels the magnesium thin film is taken up, and at the same time, the magnesium thin film located between the reels and an anode located at periphery of the magnesium thin film act in synergy to generate electricity.

### Citation List

### Patent Literature

Patent Literature 1: Unexamined Japanese Patent Application Kokai Publication No. 2012-15013.

### Summary of Invention

### Technical Problem

However, the fuel elements for the magnesium battery disclosed in Patent Literature 1 etc., employ cassette-type fuel elements, and thus two reels must be included as using one reel to take up an unused magnesium thin film while using the other reel to take up the used magnesium thin film, which in fact makes it difficult for miniaturization.

In view of the problems addressed above, it is therefore an object of the present disclosure to provide a magnesium-air battery fuel element capable of being adapted for a miniaturized construction, a magnesium-air battery, a method for producing a magnesium-air battery fuel element, a magnesium-air battery system, and a use method for a magnesium-air battery system.

### Solution to Problem

According to a first aspect of the present disclosure for achieving the aforementioned object, there is provided a magnesium-air battery element serving as a cathode in a magnesium-air battery that contains air as an anode active material and magnesium as a cathode active material, including,
a film, and
a magnesium film that is adhered on the film, wherein
a roll shape is formed by the film and the magnesium film.

A separator that covers the film and the magnesium film is further included, wherein
a roll shape may be formed with the film, the magnesium film, and the separator.

The film is conductive and,
a roll shape may be formed with the film, the magnesium film, and a permeable film covering the magnesium film and is permeable by oxygen or a hydroxyl group.

The magnesium film may be formed on the film by a vapor deposition.

According to a second aspect of the present disclosure for achieving the aforementioned object, there is provided a magnesium-air battery including,
the magnesium-air battery fuel element according to the first aspect of the present disclosure,
an anode using air as an anode active material,
an electrolyte located between the magnesium-air battery fuel element and the anode.

A carbon felt that is located between the magnesium-air battery fuel element and the anode, is further included, wherein
liquid electrolyte containing the dissolved electrolyte may be used to impregnate the carbon felt.

A contact area between the anode and the carbon felt may be greater than a contact area between the magnesium-air battery fuel element and the carbon felt.

The carbon felt may be arranged on the magnesium-air battery fuel element.

The anode may include a box shaped conductive member and activated carbon housed in the conductive member.

Another anode may be arranged under the magnesium-air battery fuel via another carbon felt.

The anode includes a hollow tube at an internal portion thereof in which the liquid electrolyte flows therewithin, and
the hollow tube may include pores to have the liquid electrolyte flowing within the hollow tube further flow across outside the hollow tube.

According to a third aspect of the present disclosure for achieving the aforementioned object, there is provided a method for producing a magnesium-air battery fuel element serving as a cathode in a magnesium-air battery that contains air as an anode active material and magnesium as a cathode active material, the method comprising the steps of,
adhering a magnesium film on a film, and
forming a roll shape with the film and the magnesium film.

According to a fourth aspect of the present disclosure for achieving the aforementioned object, there is provided a magnesium-air battery system that that uses air as an anode active material and magnesium as a cathode active material, and a magnesium-air battery fuel element serves as a cathode, including,
a supplier,
a battery body,
a wind-up reel, and
a driver, wherein
the magnesium-air battery fuel element is formed from a film, and a magnesium film adhered on the film to have a roll shape,
the supplier is connected to the magnesium-air battery fuel element and is rotatable with respect to a center, that is, a roll shaft of the connected magnesium-air battery fuel element, and the supplier delivers the magnesium-air battery fuel element to the wind-up reel via the battery body,
the battery body comprises an anode and an electrolyte, wherein the battery body uses the magnesium-air battery fuel element delivered from the supplier as a cathode and acts synergistically with the anode to generate electricity,
the wind-up reel winds a post-reaction magnesium-air battery fuel element of the magnesium-air battery fuel element used to generate electricity in the battery body, and forms a used fuel element having a roll shape that is removable from the wind-up reel, and
the driver rotationally drives the supplier and the wind-up reel.

The magnesium-air battery system is housed inside of an electric device that receives an electricity supply,
the magnesium-air battery fuel element is inserted into an insertion opening formed in the electric device to connect to the supplier,
the used fuel element may be formed removable from the wind-up reel as the used fuel element is removed from an outlet formed on the electric device.

A plurality of blocks of battery units that includes a plurality of battery units having the supplier, the battery body, and the wind-up reel, wherein
the driver is an electric motor that may consume electricity to rotationally drive the supplier and the wind-up reel of a block of battery units, wherein the electricity is generated by other remaining blocks of battery units.

According to a fifth aspect of the present disclosure for achieving the aforementioned object, there is provided A use method for a magnesium-air battery system that comprises a supplier, a battery body, a wind-up reel, and a driver, in which air is serving as an anode active material, magnesium is serving as a cathode active material, and a magnesium-air battery fuel element is used as a cathode, the method including the steps of,
connecting the magnesium-air battery fuel element formed into a roll shape with a film and a magnesium film adhered on the film,
delivering the magnesium-air battery fuel element connected to the supplier to the wind-up reel via the battery body as the supplier is rotationally driven by the driver,
generating electricity in the battery body including an anode and an electrolyte by using the magnesium-air battery fuel element delivered from the wind-up reel as a cathode acting in synergy with the anode,
forming a roll-shaped used fuel element by winding a post-reaction magnesium-air battery fuel element of the magnesium-air battery fuel element used to generate electricity in the battery body on the wind-up reel, and
removing the used fuel element that is formed by the wind-up reel.

### Advantageous Effects of Invention

The present disclosure provides a magnesium-air battery fuel element capable of being adapted for miniaturization, a magnesium-air battery, a method for producing a magnesium-air battery fuel element, a magnesium-air battery system, and a use method for a magnesium-air battery system.

### Brief Description of Drawings

FIG. 1 shows an example of application of a magnesium-air battery fuel element according to Embodiment 1 used in a magnesium-air battery system included in an electric device;
FIG. 2 is a perspective view showing a schematic structure of a magnesium-air battery fuel element according to Embodiment 1;
FIG. 3A shows a method for producing a magnesium-air battery fuel element;
FIG. 3B shows a method for producing a magnesium-air battery fuel element;
FIG. 4 is a diagram showing schematic structure of a magnesium-air battery system according to Embodiment 1;
FIG. 5 shows an example of application of a magnesium-air battery fuel element according to Embodiment 1 in a magnesium-air battery system included in a large electric device;

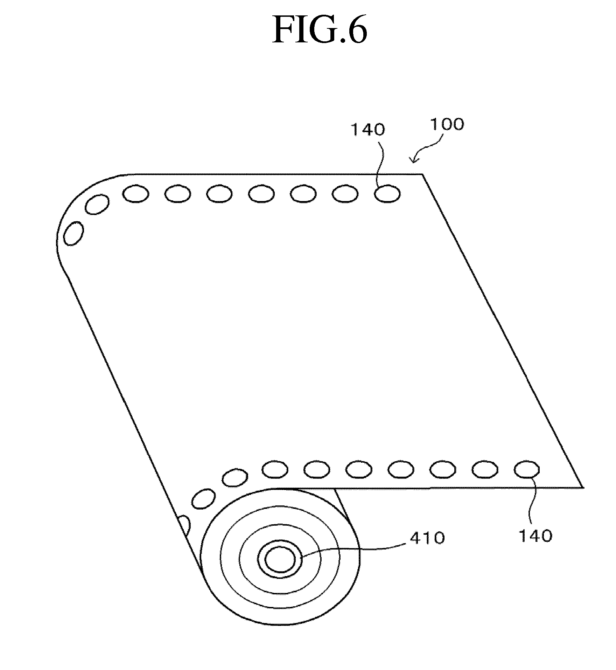

FIG. 6 is a perspective view showing a schematic structure of a magnesium-air battery fuel element according to a modification example;
FIG. 7A is a perspective view showing a schematic structure of a magnesium-air battery fuel element according to Embodiment 2;
FIG. 7B is a schematic cross sectional view of a magnesium-air battery fuel element taken along cut line I-I shown in FIG. 4;
FIG. 8 is an explanatory drawing showing a contact between a magnesium film body and a cathode terminal at a cathode;
FIG. 9 is a schematic cross sectional view showing inside of a battery body according to Embodiment 3 taken along cut line II-II shown in FIG. 4;
FIG. 10 is a schematic cross sectional view showing inside of a battery body according to a modification example of Embodiment 3 taken along cut line II-II shown in FIG. 4;
FIG. 11 is a schematic cross sectional view showing inside of a battery body according to Embodiment 4 taken along cut line II-II shown in FIG. 4;
FIG. 12 is a perspective view of essential portions of a hollow tube according to Embodiment 4;
FIG. 13 is a schematic cross sectional view of an anode taken along cut line III-III shown in FIG. 11;
FIG. 14 is a diagram showing a schematic structure of a magnesium-air battery according to Embodiment 5;
FIG. 15 shows a schematic structure of a battery body according to an example;
FIG. 16A shows a shape and a size of a pre-assembled copper mesh;
FIG. 16B is a perspective view of an assembled copper mesh; and
FIG. 17 shows a change in voltage applied across a resistor over time in an experiment using a sodium chloride solution activated battery and a recycled solution activated battery.

### Description of Embodiments

Hereinafter, embodiments of the present disclosure are described with reference with figures.

### (Embodiment 1)

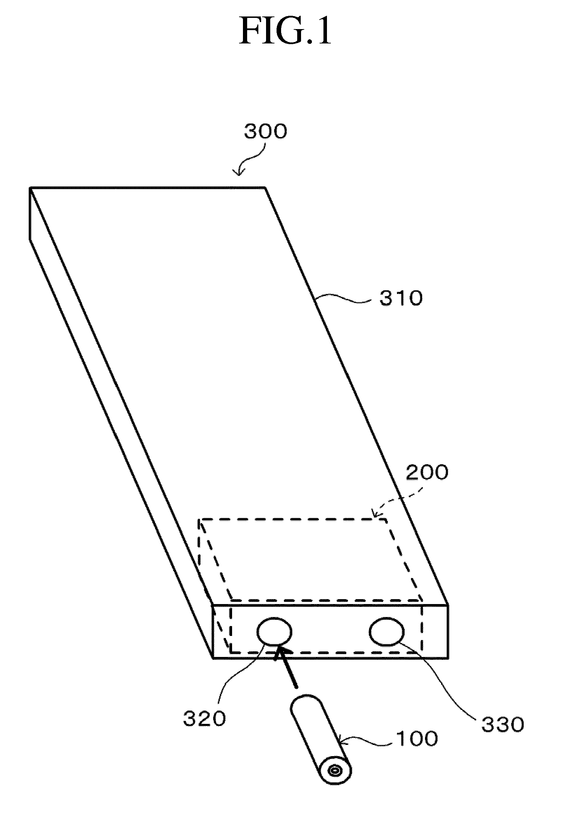

FIG. 1 shows an example of application of a magnesium-air battery fuel element 100 of Embodiment 1 in a magnesium-air battery system 200 included in an electric device 300.

The magnesium-air battery fuel element 100 according to the embodiment is employed as fuel in a magnesium-air battery, which adopts air to serve as an anode active material and magnesium to serve as a cathode active material.

The magnesium-air battery system 200 according to the embodiment includes a magnesium-air battery that generates electricity by feeding the magnesium-air battery fuel element 100 to a cathode, and the generated electricity is supplied to the electric device 300.

The electric device 300 represents a device such as a cell phone or a personal computer that is driven by electricity supplied via the magnesium-air battery system 200 as source of energy. Inside a housing 310 of the electric device 300, the magnesium-air battery system 200 is housed. On the housing 310 of the electric device 300, an insertion opening 320 for feeding the magnesium-air battery fuel element 100 to the magnesium-air battery 200, and an outlet opening for removing the used magnesium-air battery fuel element 100 (hereinafter referred to as, the "used fuel element") are formed.

Hereinafter, the magnesium-air battery fuel element 100 according to the embodiment is described with details.

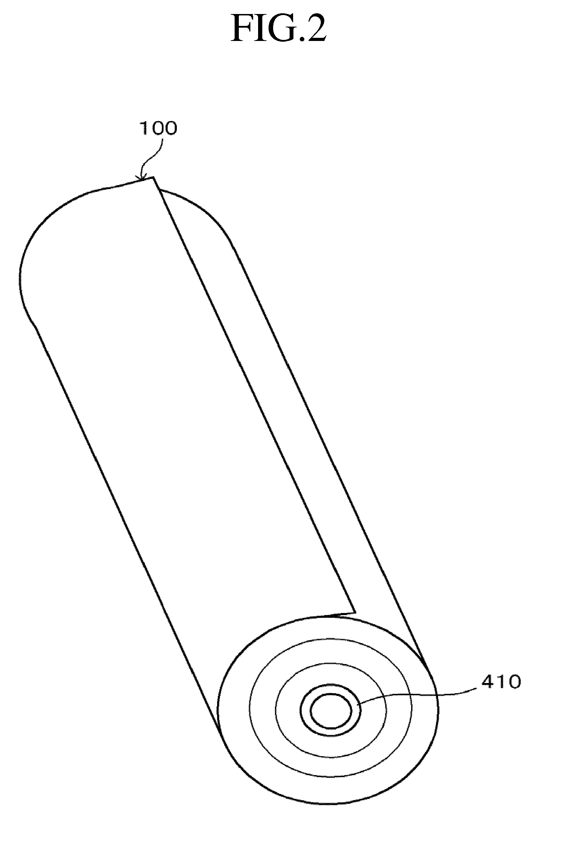

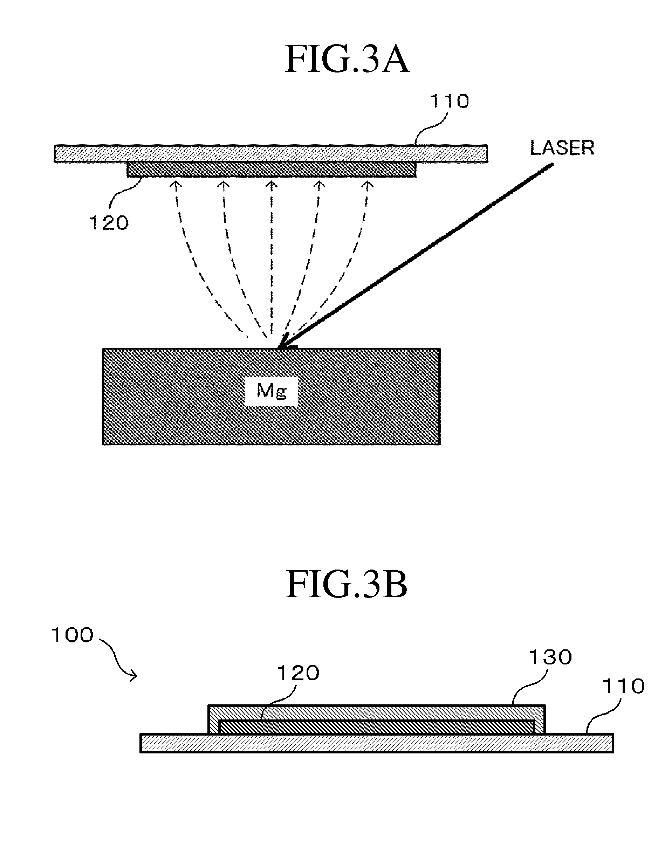

FIG. 2 is a perspective view showing a schematic structure of the magnesium-air battery fuel element 100 according to the embodiment, and FIG. 3A and

FIG. 3B show a method for producing the magnesium-air battery fuel element 100. As shown in FIG. 2, FIG. 3A and FIG. 3B, the magnesium-air battery fuel element 100 is wound around a hollow cylinder-shaped reel 410, and is formed into a roll shape in which the magnesium-air battery fuel element 100 is constituted by a conductive film 110, a magnesium film 120 adhered to the conductive film 110, and a permeable film 130 covering the magnesium film 120.

Here, an example of a method for producing the magnesium-air battery fuel element 100 is described.

Initially, the magnesium film 120 is formed on the conductive film 110 by a vapor deposition. In detail, as is shown in FIG. 3A, the magnesium film 120 is formed by irradiation of magnesium, where the magnesium is given as an example of materials for irradiation, and magnesium that is evaporated due to this process is vapor deposited on the conductive film 110.

Further, as shown in FIG. 3B, surface of the magnesium film 120 is covered with the permeable film 130 possessing oxygen permeability or a hydroxyl group ion permeability as such ion is reactive with magnesium. The thickness of the magnesium-air battery fuel element 100 formed accordingly is preferably between a few microns to a few hundred microns. The magnesium-air battery fuel element 100 is then wound around the reel 410 to form a roll shape.

In the following, the magnesium-air battery system 200 according to the embodiment is described with details.

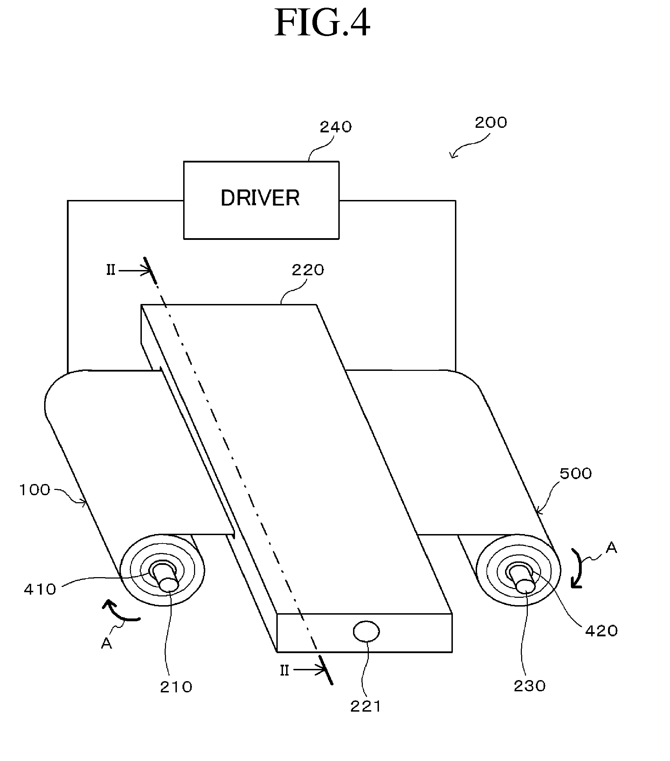

FIG. 4 is a diagram showing a schematic structure of the magnesium-air battery system of the embodiment. As presented in FIG. 4, the magnesium-air battery system 200 is constituted by a supplier 210, a battery body 220, a wind-up reel 230, and a driver 240.

The supplier 210 is connected to the magnesium-air battery fuel element 100, and is rotatable with respect to a center, that is, a roll shaft of the magnesium-air battery fuel element 100, in addition, the supplier 210 delivers the magnesium-air battery fuel element 100 to the wind-up reel 230 via the battery body 220.

In detail, the supplier 210 is constituted by a shaft that is driven rotationally in clockwise direction by the driver 240 as presented in FIG. 4. The shaft of the supplier 210 is formed detachably with the reel 410 that is used to wind up the magnesium-air battery fuel element 100. The shaft of the supplier 210 inserted into the center hole of the reel 410 that winds up the magnesium-air battery fuel element 100, so that the supplier 210 and the magnesium-air battery fuel element 100 are connected. By this, the magnesium-air battery fuel element 100 is able to rotate with respect the roll shaft, namely the center, along with the supplier 210 and is delivered to the battery body 220.

The battery body 220 includes an anode and an electrolyte, and using the magnesium-air battery fuel element 100 delivered from the supplier 210 as a cathode, which acts in synergy with the anode to generate electricity such that the battery body 220 serves as a magnesium-air battery. In detail, the battery body 220 supports the magnesium-air battery fuel element 100 as the battery body 220 pulling the magnesium-air battery fuel element 100 thereinto, and at the same time, delivers the post-reaction (used) magnesium-air battery fuel element 100 used for generating electricity to the wind-up reel 230. The battery body 220 also includes an injection opening 221 for the liquid electrolyte.

Sodium chloride, for example, is used for the electrolyte of the battery body 220. The liquid electrolyte is fed to the battery body 220 as filling inside thereof through the injection opening 221 of the battery body 220.

The wind-up reel 230 winds up the post-reaction (used) magnesium-air battery fuel element 100 of the battery body 220 used to generate electricity, and forms a removable roll of a used fuel element 500.

In detail, the wind-up reel 230, constructed in the same way as the supplier 210, includes a shaft that is driven rotationally in clockwise direction by the driver 240 as presented in FIG. 4. The shaft of the wind-up reel 230 formed detachably with the reel 420 that the used fuel element 500 is wound thereon. The shaft of the wind-up reel 230 is inserted into a center hole of the reel 420 where the used fuel element 420 is wound thereon, and that the wind-up reel 230 and the used fuel element 500 is connected to each other. Due to this, the post-reaction magnesium-air battery fuel element 100 used to generate electricity is wound as it rotate with respect to the roll shaft serving as a center, along with the wind-up reel 230, such that a roll shaped used fuel element 500 is formed.

The supplier 210 and the wind-up reel 230 are driven rotationally by the driver 240. For example, a spring, an electric motor or the like provides the functionality of the driver 240. It is to be noted that if the electric device 300 requires relatively small amount of electricity such as in cell phones and personal computers, it is preferred to use a spring for the driver 240 and manually wind the spring, so that the supplier 210 and the wind-up reel 230 are driven rotationally. Alternatively, a knob, and a mechanism for transferring the rotation torque of the knob to the supplier 210 and to the wind-up reel 230 may be employed to manually wind up the knob so that the supplier 210 and the wind-up reel 230 are driven rotationally.

In the electric device 300 using the magnesium-air battery, a standby mode where no electricity is being consumed, and an operation mode where electricity is being consumed are repeated in actual operations. In the course of such event, if the spring is singularly adopted to serve as the driver 240, and if the supplier 210 and the wind-up reel 230 are rotationally driven, the magnesium-air battery fuel element 100 is continued to be wound even though the electric device 300 is not being operated. To avoid this occurrence, a conventionally known continuously variable transmission mechanism, for example, may be employed to change the number of revolutions used for the shafts of the supplier 210 and the wind-up reel 230 in accordance with the amount of current drawn by the electric device 300 or the amount of current potentially generated by the magnesium-air battery fuel element 100. As an alternative, the rotational drive force of the supplier 210 and the wind-up reel 230 may by controlled by adopting, for example, an on/off operation of a switch that permits switching between the winding operation and termination of the winding operation of the magnesium-air battery fuel element 100 to make the magnesium-air battery fuel element 100 travel a predetermined distance at every other predetermined period of time. Further, a concurrent use of a small button battery may be able to send a control signal to the driver 240 that indicates the activation of wind-up operation of the magnesium-air battery fuel element 100 from a condition where the magnesium-air battery is completely at rest.

Hereinafter, a use method for the magnesium-air battery system 200 having the aforementioned structure is described.

As Use Example 1, an example of using the magnesium-air battery system 200 in the electric device 300 such as cell phones as presented in FIG. 1 is described.

The magnesium-air battery fuel element 100 is filled in advance in a casing about the size of a soda can. Upon the use of the magnesium-air battery fuel element 100, the magnesium-air battery fuel element 100 is removed from the casing and inserted into the insertion opening 320 on the electric device 300.

The magnesium-air battery fuel element 100 inserted from the insertion opening 210 is mounted on the supplier 210 of the magnesium-air battery system 200 at the internal of the electric device 300 as presented in FIG. 4. The magnesium-air battery fuel element 100 is delivered to the battery body 220 as the supplier 210 and the wind-up reel 230 rotate due to the driver 240. At the battery body 220, the post-reaction magnesium-air battery fuel element 100 used for generating electricity is wound by the wind-up reel 230 and thus, the used fuel element 500 is formed.

The used fuel element 500 is removed from the wind-up reel 230 along with the reel 420 and further removed from the outlet opening 330 on the electric device 300.

It is noted that the used fuel element 500 may be collected into a collection box, for example, installed in stores, vending machines or the like. A magnesium smelting using laser beam and other such means from magnesium oxide contained in the used fuel element 500 that is being collected, may be performed, and with this magnesium that is obtained, the magnesium-air battery fuel element 100 may be formed as well.

As for Use Example 2, an example of using the magnesium-air battery system 200 in a large electric device such as a motor vehicle or a household electrical appliance requiring a relatively large amount of electricity compared to that consumed by the electric device 300, is described hereinafter.

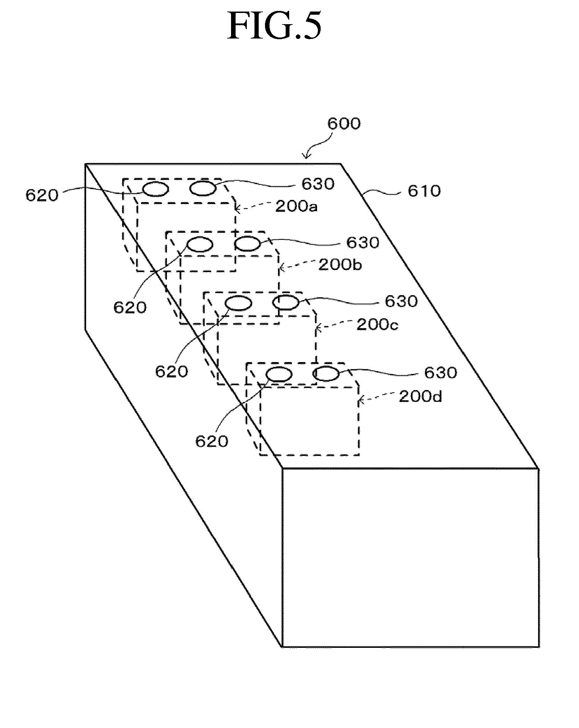

FIG. 5 shows a use example of the magnesium-air battery fuel element 100 of Embodiment 1 in magnesium-air battery systems 200a to 200d included in a large electric device 300. As presented in FIG. 5, unlike the electric device 300 in Use Example 1, the large electric device 600 includes four pairs of insertion opening 620 and outlet opening 630 on its housing 610. In this way, supposing if the large electric device 600 is a motor vehicle, having a plurality of pairs of the insertion openings 620 and the outlet openings 630 in the large electric device 600 enhances the convenience in driving a long distance. In other words, using an individually large sized fuel does not allow the fuel to be exchanged until it is empty thereby, due consideration for arriving in time to the next fuel exchange point will be necessary. In contrast, as presented in FIG. 5, if an electric vehicle contains a plurality of magnesium-air battery systems 200a to 200d, then, exhaustion of the magnesium-air battery fuel element 100 in the magnesium-air battery system 200a allows the switching over of the battery system to the magnesium-air battery system 200b, and further, after the magnesium-air battery fuel element 100 in the magnesium-air battery system 200b is exhausted, which then allows the next switching over of the battery system to the magnesium-air battery 200c, enabling the exchange of the magnesium-air battery fuel element 100 through exchanging each small exhausted portion that takes place at any stop over, and thus, a similar use in the gasoline-powered vehicles can be achieved.

In Use Example 2 above, the size of the magnesium-air battery fuel element 100 is preferably about the size of a soda can. This indeed allows the magnesium-air battery fuel element 100 to be distributed and purchased via conventional vending machines that are used for selling canned beverages, therefore, no establishment of any new infrastructures for distributing and purchasing the magnesium-air battery fuel element 100 is necessary. Further, since safe storage of the magnesium-air battery fuel element 100 is rendered as long as it is confined in a can or the like, the backup magnesium-air battery fuel elements 100 are purchasable for stock.

The used fuel element may be collected and recycled in the same way in Use Example 1.

As discussed, according to the magnesium-air battery fuel element 100 having the aforementioned structures, the roll shaped magnesium-air battery fuel element 100 is fed to the magnesium-air battery system 200 as fuel, so that miniaturization of the magnesium-air battery fuel element 100 is achieved in comparison to a cassette-type fuel element containing a pair of reels and/or a delivery mechanism of the magnesium film.

In the foregoing description, the embodiment of the present disclosure is described, and it is to be noted that the present disclosure is not limited to the above embodiment.

To give an example, in the embodiment above, the method employing laser irradiation using magnesium as a material for irradiation in the method for vapor deposition of magnesium on the conductive film 110 is described, yet the material for irradiation is not limited to pure magnesium but magnesium oxide, magnesium hydroxide, or a mixture of deoxidizer and magnesium may be used as well. With regard to the vapor deposition method of magnesium, which is not limited to the method particularly using laser but vapor depositions by, for example, electric discharge may be applied as well. As far as the laser is concerned, a solar-pumped laser or semiconductor laser may be applied. To avoid using fossil fuels in order to prevent global warming, the solar-pumped laser that allows to take the laser directly from the sun light may be used. Yet further, other than these approaches, it is also effective to use electricity of dump excess electricity from solar batteries, wind power generation, geothermal generation, and nuclear reactor may be certainly converted into semiconductor laser.

Further, in the embodiment above, the magnesium film 120 is adhered onto the conductive film 110 due to the vapor deposition, yet the method for depositing the magnesium film 120 on the conductive film 110 is not limited to the vapor deposition.

Yet further, in the embodiment above, the example of delivering and winding the magnesium-air battery fuel element 100 used to connect the shafts of the supplier 210 and the wind-up reel 230 respectively to the reels 410, 420 is described; however, the method for winding the magnesium-air battery fuel element 100 that uses the wind-up reel 230 is not limited to such method. To give an example, a method similar to that used in winding negative film for film cameras may be applied. In detail, similar to perforations of such negative film, the magnesium-air battery fuel element 100 includes a plurality of openings 140 formed on both sides thereof where each opening is equidistantly spaced apart as presented in FIG. 4. The wind-up reel 230 may further include a gear (not shown) that is rotationally driven by the driver 240, so that as the gear rotates and gear teeth intertwine with the openings 140 of the magnesium-air battery fuel element 100, the magnesium-air battery fuel element 100 is wound by the wind-up reel 230.

Yet further, in the embodiment above, an example with regard to injecting the liquid electrolyte into the internal portion of the battery body 220 is described, yet the structure of the battery body 220 is not limited to such structure. To give an example, the battery body 220 may be configured to have a sheet of paper impregnated with the liquid electrolyte placed between the anode and the cathode, that is, the magnesium-air battery fuel element 100. With this structure, liquid electrolytes in small electric devices such as cell phones can be handled easily.

### (Embodiment 2)

Hereinafter, Embodiment 2 is described. In Embodiment 1 above, the example of the magnesium-air battery fuel element 100 formed into a roll shape constituted by the conductive film 110, the magnesium film 120 adhered onto the conductive film 110, the permeable film 130 covering the magnesium film 120 is described. However, structures of the magnesium-air battery fuel element 100 are not limited to such structure. In Embodiment 2, another example of structures for the magnesium-air battery fuel element 100, which includes the magnesium film covered with the separator and also employs a roll shape, is described. Note that in the following description, elements equivalent to those of Embodiment 1 denote the same reference numbers, and detailed discussions of such elements are omitted.

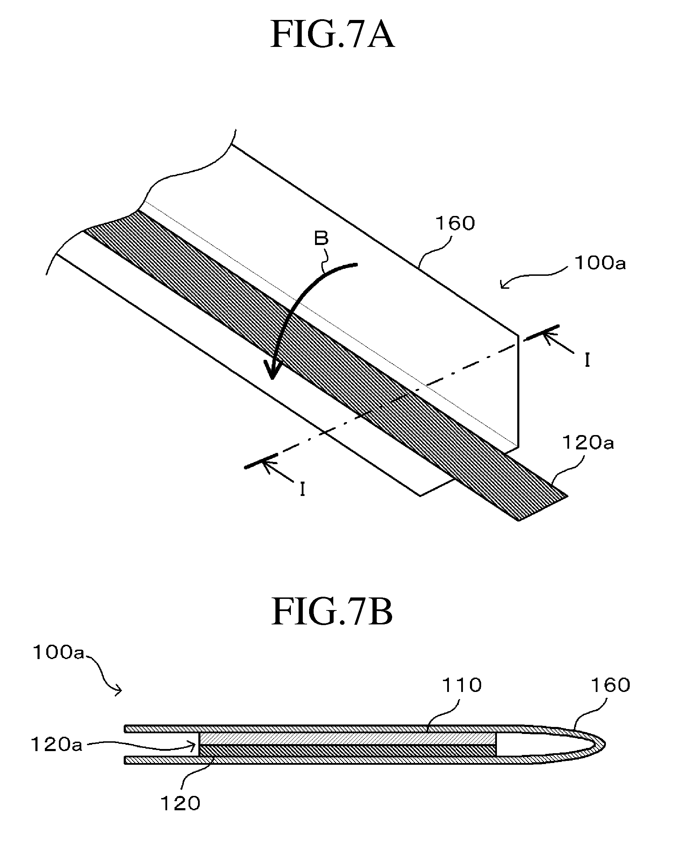

FIG. 7A is a perspective view showing a schematic structure of the magnesium-air battery fuel element 100a of the embodiment, and FIG. 7B is a schematic cross sectional view of the magnesium-air battery fuel element 100a taken along cut line I-I of FIG. 7A. In the same way as in the magnesium-air battery fuel element 100 of Embodiment 1 presented in FIG. 2, the magnesium-air battery fuel element 100a is also formed into a roll shape, yet which differs in including a separator 160. As shown in FIG. 7A and FIG. 7B, the magnesium-air battery fuel element 100a according to the embodiment is constituted by the conductor film 110, the magnesium film 120, and the separator 160.

The separator 160, which allows hydroxide ions and water to pass through, isolates the anode and the cathode, that is, the magnesium film 120. The separator 160 is configured to cover over a magnesium film body 120a, that is an integral structure formed by the conductive film 110 and the magnesium film 120. In detail, the separator 160 is folded in a V-shape so that an opening along a longitudinal direction of the magnesium film body 120a is formed. The magnesium film body 120a is arranged within the folded separator 160.

Hereinafter, an example a method for producing the magnesium-air battery fuel element 100a is described.

In the same way as in Embodiment 1 and as shown in FIG. 3A, the magnesium film body 120a is formed using a vapor deposition of magnesium on the conductive film 110.

The magnesium-air battery fuel element 100a is formed by folding the separator 160 in a direction indicated by the arrow B in FIG. 7A to put the magnesium film body 120a within the separator 160. In the same way as in Embodiment 1, the magnesium-air battery fuel element 100a is wound using the reel 410 and is formed into a roll as presented in FIG. 2. The step of winding may certainly be performed concurrently with the step of vapor depositing of magnesium, and the step of sandwiching the magnesium film body 120a within the separator 160.

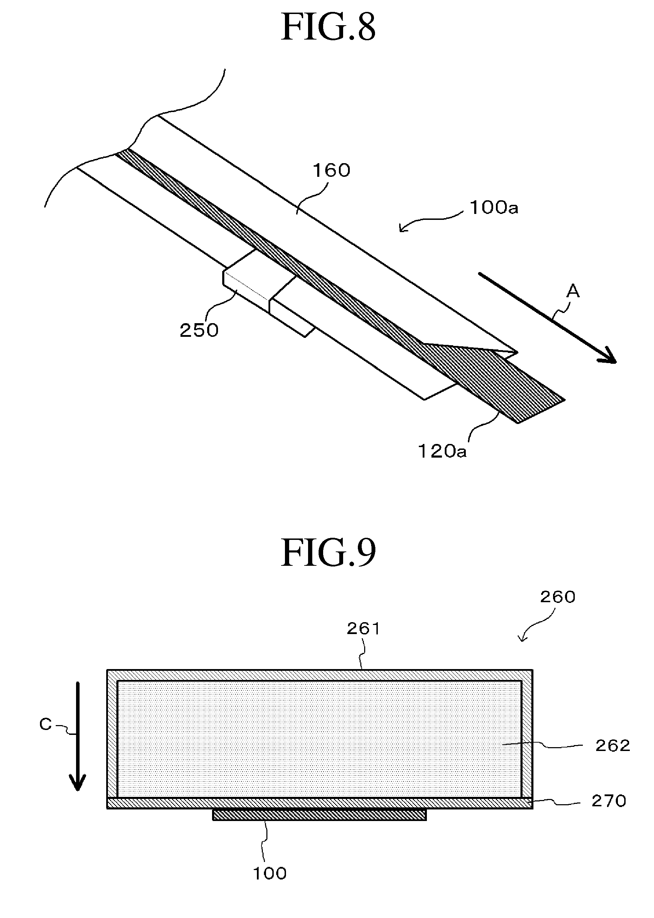

Here, a contact formed between the magnesium film body 120a in the cathode, and a cathode terminal 250 is described with reference to FIG. 8. The cathode terminal 250 presented in FIG. 8 is formed by conductive materials as it serves as a cathode terminal of the magnesium-air battery. The cathode terminal 250 is formed in a V-shape and an opening is located in an opposite direction to that of the opening in the separator 160. Further, the cathode terminal 250 is arranged to clamp a part of the one of the separator 160 folded in two. By this, a part of the cathode terminal 250 and the magnesium film body 120a are in contact with each other within the separator 160. With this structure, regardless of having the magnesium film body 102a that is put within the separator 160, the cathode terminal 250 can remain in contact with the magnesium film body 120a while the magnesium-air battery fuel element 100a is moving forward and wound in a direction indicated by the arrow A (in same way as in the direction indicated by the arrow A of FIG. 4).

In the magnesium-air battery fuel element 100a structured as above, magnesium compounds such as magnesium oxide or magnesium hydroxide are generated from the magnesium film 120 in the cathode due to an oxidation-reduction reaction. These magnesium compounds are extremely fragile so that assumingly if the magnesium film body 120a passes through inside the battery body 220 and is wound by the wind-up reel 230 as indicated in FIG. 4, tension exerted on the magnesium film body 120a during the winding process may cause the magnesium compounds to be sliced into pieces at inside the battery body 220 or to be left inside the battery body 220. However, in the embodiment, the magnesium film body 120a put within the separator 160 passes through inside of the battery body along with the separator 160, which then are wound by the wind-up reel 230. Therefore, because the magnesium compounds generated within the battery body 220 pass through inside of the battery body 220 in the manner that the magnesium compounds are placed within the separator 160, no residue thereof is found within the battery body 220. As a result, a perpetually clean internal condition of the battery body 220 is achieved.

Note that in the embodiment, magnesium is described as yielded by the vapor deposition on the conductive film 110, yet the film used for vapor deposition of magnesium is not limited to the conductive ones.

### (Embodiment 3)

Now, Embodiment 3 is described. In Embodiment 3, an example of structures for the battery body 220 in Embodiment 1 is described. Note that in the following description, same elements from Embodiment 1 denote the same reference numbers, and details of their discussions are omitted.

FIG. 9 is a schematic cross sectional view of inside the battery body 220 taken along cut line II-II shown in FIG. 4. As presented in FIG. 9, the battery body 220 of the embodiment retains the anode 260 and the carbon felt 270 therewithin. The anode 260 is constituted by a conductive member 261 and activated carbon 262.

The conductive member 261 preserves a feature for carrying electrons to the activated carbon 262. The conductive member 261 employs a cube shape in which the activated carbon 262 is retainable therewithin. By forming the conductive member 262 in the form of a box and having the activated carbon 262 retained therewithin, a large contact area between the conductive member 261 and the activated carbon 262 can be created such that the values of current that can be output by the magnesium-air battery is increased. The conductive member 261 may be formed by porous materials such as metal mesh in order to prevent oxygen shortage around the activated carbon 262.

The activated carbon 262 is used as an anode in the magnesium-air battery to carry out the oxidation-reduction reaction of oxygen by using oxygen in air serving as an anode active material. The activated carbon 262 is retained within a space formed by the conductive material 261 and carbon felt 270.

The carbon felt 270 constitutes felt that contains carbon powders or fibers of activated carbon and the like, and which is arranged between the magnesium-air battery fuel element 100 and the anode 260. The carbon felt 270 is impregnated with liquid electrolyte of dissolved electrolyte. This carbon felt 270 is able to hold sufficient amount of liquid electrolyte and oxygen in comparison to the felt that does not contain carbon.

The contact area between the anode 260 and the carbon felt 270 is configured to be larger than the contact area formed between magnesium-air battery fuel element 100 and the carbon felt 270. If the contact area between the anode 260 and the carbon felt 270 is about the same as the contact area between the magnesium-air battery fuel element 100 and the carbon felt 270, the output generated by the magnesium-air battery would be dependent on the performance of the anode 260. Yet if the contact area between the anode 260 and the carbon felt 270 is larger than (for example, twice as much) the contact area between the magnesium-air battery fuel element 100 and the carbon felt 270, a greater output can be yielded in comparison to having about the same contact areas for these elements.

The carbon felt 270 is arranged on the magnesium-air battery fuel element 100. By having such arrangement, the liquid electrolyte contained in the carbon felt 270 flows downward due to the gravity, in other words, which flows in a direction indicated by the arrow C in FIG. 9, thereby an excellent contact of the magnesium-air battery fuel element 100 with the liquid electrolyte is achieved without using any force to hold down the carbon felt 270 on the magnesium-air battery fuel element 100 in attempt to have them in contact with each other. Such arrangement is suitable for electric devices with no frequent occurrence of vertical position change, for instance, magnesium-air batteries used in electric vehicles.

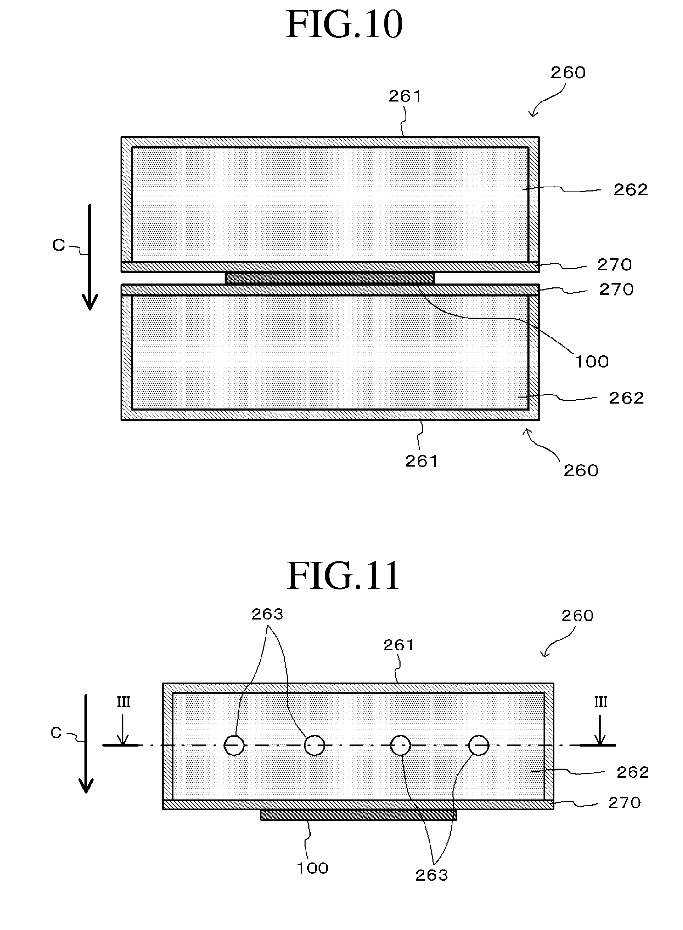

Note that the arrangements for the anode 260 and the carbon felt 270 are not limited to those presented in FIG. 9. To give an example, another anode 260 may be further arranged under the magnesium-air battery fuel element 100 via another carbon felt 270 as presented in FIG. 10. By adopting this structure of holding the magnesium-air battery fuel element 100 between two anodes 260 both from top and bottom, a greater output is yield in comparison to when having the anode 260 only on top of the magnesium-air battery fuel element 100. Such arrangement is suitable for magnesium-air batteries, for example, used in cell phones in which positions in vertical direction changes.

### (Embodiment 4)

Hereinafter, Embodiment 4 is described. In Embodiment 4, an example of modification of the anode 260 described in Embodiment 3 is described. Note that in the following, elements equivalent to those in Embodiment 3 denote the same reference numbers and that details of their discussions are omitted.

FIG. 11 shows a schematic cross sectional view of inside of the battery body 220 taken along cut line II-II of FIG. 4. As presented in FIG. 11, the anode 260 and the carbon felt 270 are confined within the battery body 220 of the embodiment. The anode 260 is constituted by the conductive member 261, the activated carbon 262, and a hollow tube 263. The anode 260 of the embodiment differs from the anode 260 of Embodiment 3 in that the anode 260 of this embodiment includes the hollow tube 263.

The hollow tube 263 represents a tube in which an externally fed liquid electrolyte flows therewithin, and its diameter is, for example, about a few millimeter.

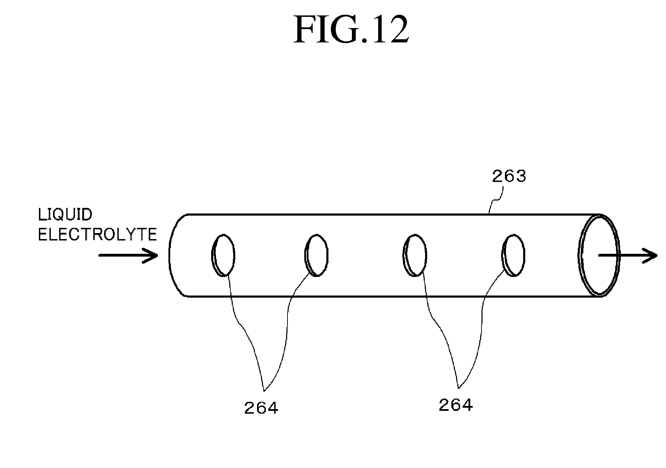

FIG. 12 is a perspective view showing essential portions of the hollow tube 263. A plurality of fine pores 264 are formed on a circumferential wall of the hollow tube 263. The liquid electrolyte that flows within the hollow tube 263 permeates into the activated carbon 262 as the liquid electrolyte shifts outside the hollow tube 263 a little by little via the fine pores 264.

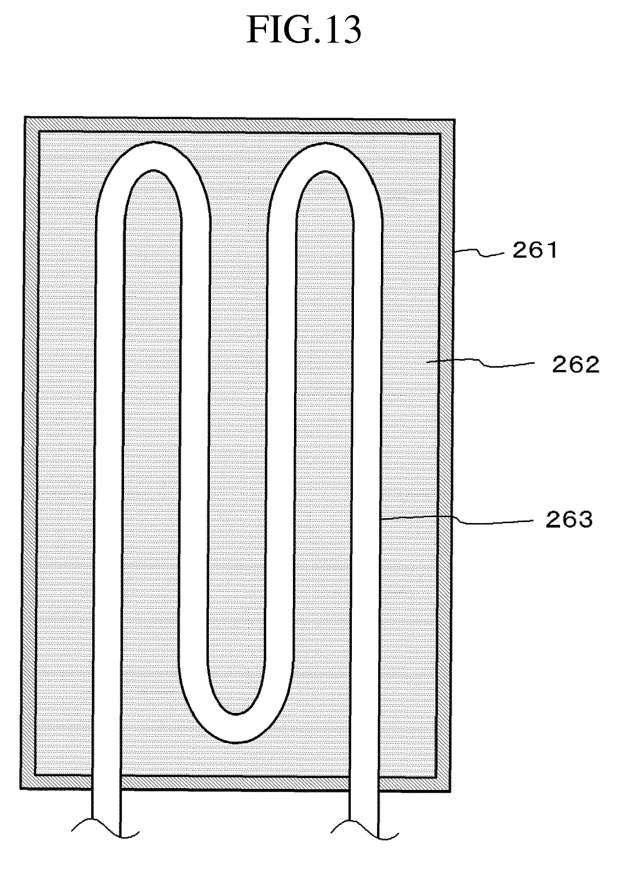

FIG. 13 shows a schematic cross sectional view of the anode 260 taken along a cut line III-III of FIG. 11. The hollow tube 263 is arranged across the entire area of the anode in order to provide the liquid electrode to the entire portions of the carbon felt 270 as presented in FIG. 13.

As discussed, by including the hollow tube 263, the anode 260 of the embodiment is capable of providing sufficient supply of the liquid electrolyte across the entire carbon felt 270.

### (Embodiment 5)

Hereinafter, Embodiment 5 is described. In Embodiment 5, another example of the magnesium-air battery system 200 discussed in Embodiment 1 is described. Note that in the following description, elements that are equivalent to those discussed in Embodiment 1 denote the same reference numbers and details of their discussions are omitted.

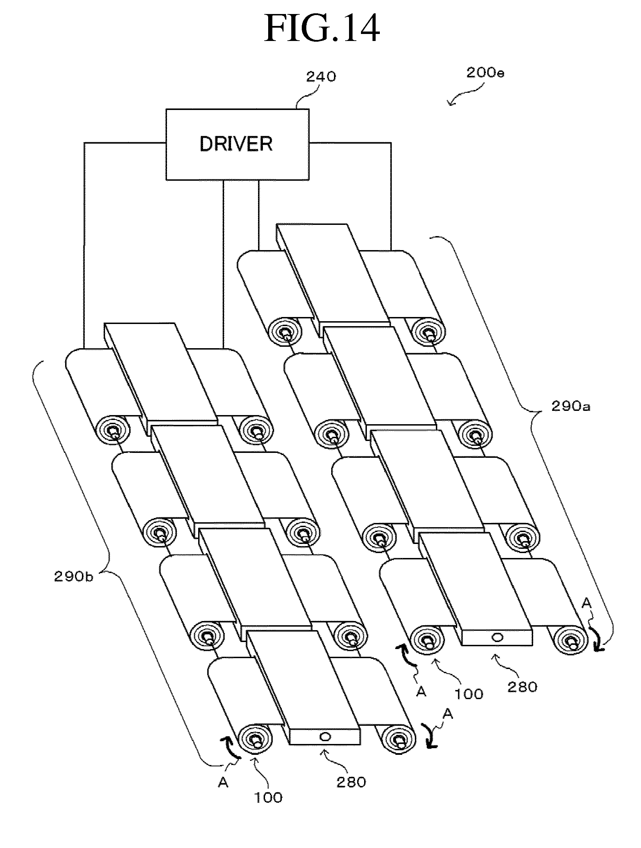

FIG. 14 is a diagram showing a schematic structure of the magnesium-air battery system 200e of Embodiment 5. The magnesium-air battery system 200e is constituted by two blocks of battery units 290a, 290b where each block has four battery units, and is also constituted by the driver 240.

The each battery unit 280 is constituted by the supplier 210, the battery body 220, and the wind-up reel 230 as same in Embodiment 1 (see FIG. 4).

The driver 240 according to the embodiment is constituted by an electric motor that is powered by electricity.

The battery units 280 constituting the block of battery units 290a, each includes the supplier 210 and the wind-up reel 230 driven by the driver 240 so that each pair of the supplier 210 and the wind-up reel 230 rotates at the same rate of rotation. Further, every supplier 210 and every wind-up reel 230 of the battery units 270 constituting the block of battery units 290b are driven by the driver 240 to have them rotate at the same rate.

Note that the rotation of the supplier 210 and the wind-up reel 230 in the block of battery units 290a, and the rotation of the supplier 210 and the wind-up reel 230 in the block of battery unit 290b are alternately performed. The electricity used in the driver 240 to rotationally drive the supplier 210 and the wind-up reel 230 of either the block of battery units 290a or the block of battery units 290b is the electricity generated by at least one of the battery units 280.

In detail, the post-reaction magnesium-air battery fuel element 100 used for generating electricity is wound by the wind-up reel 230 as the supplier 210 and the wind-up reel 230 of the block of battery units 290a make rotations. In this, the driver 240 makes use of electricity generated by at least one of the battery units 280 in the non-operating block of battery units 290b to rotationally drive the supplier 210 and the wind-up reel 230 of the block of battery units 290a.

Further, after a predetermined period of time is past (for instance, ten minutes), the supplier 210 and the wind-up reel 230 of the block of battery units 290b rotate for a short period of time (for instance, intermittently for ten seconds), and that the post-reaction magnesium-air battery fuel element 100 used for generating electricity is wound by the wind-up reel 230. In this, the driver 240 makes use of electricity generated by at least one of the battery units 280 in the non-operating block of battery units 290a to rotationally drive the supplier 210 and the wind-up reel 230 of the block of battery unit 290b.

As discussed, by including the two blocks of battery unites 290a, 290b to alternately carry out the operation of rotation, the electricity required for carrying out the operation of rotation in one of the blocks of battery units 290a, 290b can be provided by the other block of battery units 290a or 290b that also generate electricity whereby the electricity required for driving the driver 240 need not be relied upon externally supplied electricity.

Note that in the embodiment above, each block of battery units 290a, 290b is described to be constituted by four battery units 280, yet the number of battery units 280 constituting a single block of battery unit of 290a, 290b is not limited to this. Further, the number of the blocks of battery units 290a, 290b that constitute the magnesium-air battery system 200e is not limited to two, and any arbitrary plurality of blocks of battery units may constitute the magnesium-air battery system 200e.

### (Example)

Hereinafter, Example of the present disclosure is described. In this example, performance of the battery body 220 serving as the magnesium-air battery discussed in the aforementioned embodiments is verified by an experiment.

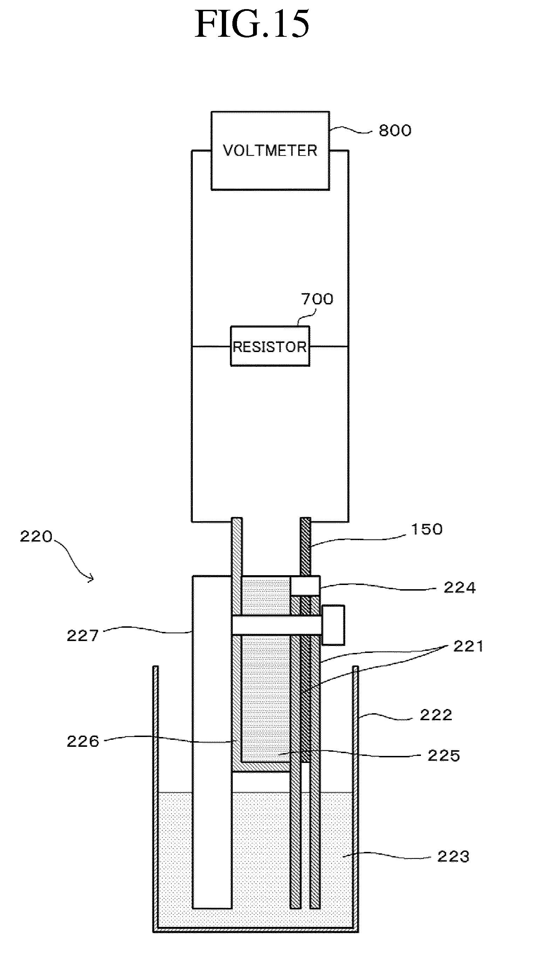

FIG. 15 shows a schematic structure of the battery body 220 according to the example. In this example, a magnesium foil 150 with length 60 mm, width 15 mm, thickness 44 micron, and material AZ31B is used for the magnesium-air battery fuel element 100 according to the aforementioned embodiments. A portion within the magnesium foil 150 having the length 45 mm and the width 15 mm, is placed within a paper filter 221, and let the remaining portion defined by the length 15 mm by the width 15 mm to be exposed.

The paper filter 221 absorbs liquid electrolyte 223 in a beaker 222 and prevents the magnesium-air battery from evaporating at the upper portion thereof. In this example, Toyo Roshi Kaisha, Ltd., Qualitative Filter Paper No. 1 is used for the paper filter 221 and it is cut off in a rectangular with length 65 mm and width 20 mm. Based on the experience of the inventor, the paper filter 221 is likely to give a smooth discharge curve when contacted on both surfaces of the magnesium foil 150 rather than it is contacted on one side thereof, so that in this example, the magnesium foil 150 is sandwiched between two paper filters 221. Further, a clip 224 holds the magnesium foil 150 and two paper filters 221 to keep them in contact with each other.

A sodium chloride solution is used for the liquid electrolyte 223. The discharge property of the magnesium-air battery changes significantly by the types of supporting electrolyte being used, yet the sodium chloride solution is easily purchased and is relatively high output, and further, it causes no harm to the environment as no toxic substance is discharged by the used liquid electrolyte. Based on the experience of the inventor, the sodium chloride solution with concentration of 1 mol/L exhibits the highest output, and thus, 20 ml of a sodium chloride solution with a concentration of 1 mol/L is used for the liquid electrolyte 223 in the experiment.

Activated carbon 225 serves as an anode in the magnesium-air battery. A material for delivering oxygen to electrons in the anode of the magnesium-air battery is needed. Such material requires excellent absorbance, excellent conductivity, and sufficient surface area. The activated carbon 225 is one of the materials that satisfies such conditions. In this experiment, Kyorin Corporation High Performance Activated Carbon Pack (average diameter of piece is 2mm) is used for the activated carbon 225.

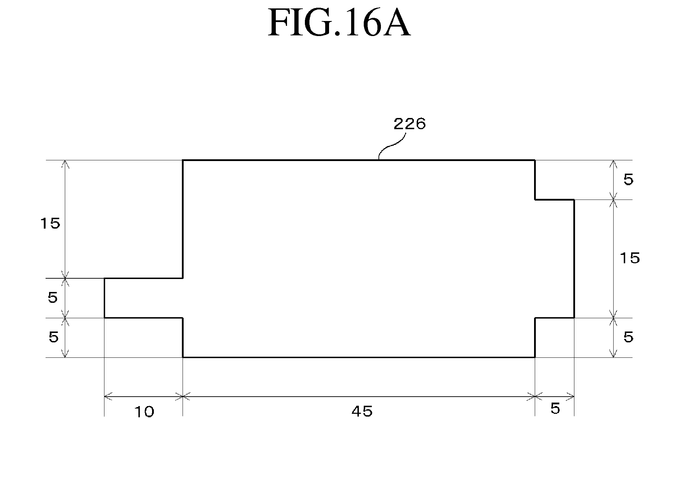

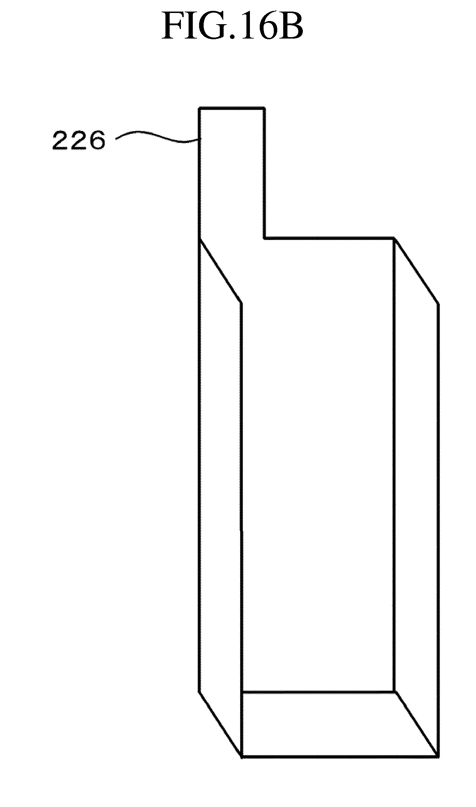

Copper mesh 226 serves as a conductor that delivers electrons to the activated carbon 225. The space in periphery of the activated carbon 225 must be aerated to prevent from being out of oxygen, and also, pelleted activate carbon 225 must be kept undisposed. In this experiment, Copper Mesh 40 mesh is used. In FIG. 16A, the shape and the size (unit of measurement, mm, is used in figures) of the pre-assembled copper mesh 226 is shown and in FIG. 16B, a perspective view of an assembled copper mesh 226 is shown.

A support 227 provides support as it tucks the magnesium foil 150, the paper filter 221, the activated carbon 225, and the copper mesh 226 altogether as a single piece.

As presented in FIG. 15, the battery body 220 structured as above is used to connect the magnesium foil 150 and the copper mesh 226 to a resistor 700, and voltages applied across the resistor is measured using a voltmeter 800. With regard to the constant-resistance discharge, accuracy of measurements and time spent on experiment have a trade-off relationship. Using low resistance values relatively increases the amount of current thereby the discharge only lasts for a short period of time, yet at the same time, discrepancies also increase. While under the high resistance values, errors can be ignored but the amount of current relatively decreases whereby, the discharge lasts for a longer period of time. Accordingly, in this experiment, a cement resistor 10 Ω dischargeable within a short period of time and has a measurement error of 1% or less is used for the resistor 700. Note that the battery body 220 according to this experiment is referred to as the sodium chloride solution activated battery.

Note also that the magnesium battery system 200 according to the aforementioned embodiments utilizes the magnesium-air battery fuel element 100 that passes through the battery body 220 to serve as the cathode. In order to mock-up this situation, simply the magnesium foil 150 is replaced after the experiment on the sodium chloride solution activated battery is complete, and the rest of the materials used in the experiment with the sodium chloride solution activated battery are reused in the following experiment. The battery body 220 used in this experiment is referred to as the recycled solution activated battery.

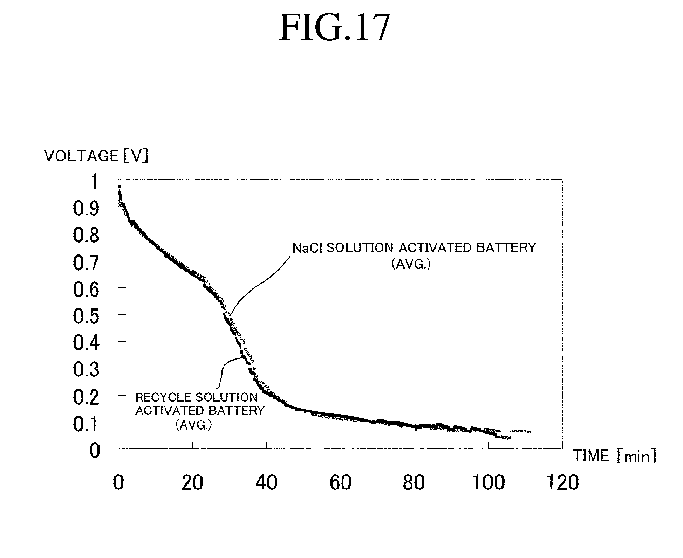

FIG. 17 presents changes in voltage applied across the resistor 700 over time in the experiment on the sodium chloride solution activated battery and the recycled solution activated battery. Comparisons between each measurement data obtained in each experiment indicate almost no change. In this respect, the applicability of the magnesium-air battery fuel element 100 that passes through inside of the battery body 220 as a cathode in the magnesium-air battery is verified.

Based on changes in current over time measured in the experiment and also based on the weight of the magnesium that is used, regardless of such simplicity of the experiment, capacity of as much as 1300 Ah/kg is achieved. In light of the fact that lithium batteries normally have capacity about 150 Ah/kg, achievability of very high performance is understood. Further optimization of the structures used in the experiment may lead to further improvements and that in theory, the maximum capacity of 2200 Ah/kg is considered to be achievable.

Frequently used smartphones have in recent years exhibited discharge capacity of 1000 mAh to 1500 mAh. In this regard, the current magnesium-air battery that has capacity of 1300 Ah/kg = 13000 mAh/g is able to accomplish this by using only 1 g thereof. In other words, using only as much as 10 g of magnesium enables the smartphones to operate for ten days or longer. The specific gravity of magnesium is 1.738 g/cm³, which gives a volume of magnesium of about 6 cm³. That is to say, the magnesium-air battery fuel element 100 can be formed into a cylinder with diameter 1 cm and length 7.6 cm. Assuming that the price of magnesium is the current rate of 300 yen/kg = 0.3 yen/g, only 3 yen would be required to supply fuels for a smartphone that can be operated as long as ten days. With further improvement, and by reaching the discharge capacity of the theoretical value of 2200 Ah/kg, the magnesium-air battery fuel element 100 that can operate a smartphone for ten days can be formed in a cylinder with weight 5.9 g, diameter 1 cm, and height of 4.5 cm, by the price of 1.8 yen. Moreover, if this is applied to personal computers, the present batteries with capacity of 5000 mAh can be replaced with the magnesium-air battery fuel element 100 having weight of 3.8 g if the capacity 1300 Ah/kg is used, and weight of 2.3 g if 2200 Ah/kg capacity is used.

It is to be understood that various modifications may be implemented by those skilled in the art without departing from the scope and spirit of the present disclosure. The foregoing embodiments described herein are to be understood as being in every respect illustrative and exemplary, but not restrictive. That is to say, the scope of the present disclosure disclosed herein is not to be determined from the embodiments, but rather from the claims. Further modifications of the present disclosure herein disclosed in the claims will occur to those skilled in the respective arts and all such modifications are deemed to be within the scope of the present disclosure.

This application claims priority benefit of Japanese Patent Application No. 2012-061089 filed on March 16, 2012. The present application also incorporates herein by reference the complete subject matter disclosed in the specification, the claims and the drawings of Japanese Patent Application No. 2012-061089.

### Industrial Applicability

The present disclosure is suitable for a magnesium-air battery using air as an anode active material and magnesium as a cathode active material.

### Reference Signs List

- 100, 100a: Magnesium-air battery fuel element
- 110: Conductive film
- 120: Magnesium film
- 120a: Magnesium film body
- 130: Permeable film
- 140: Opening
- 150: Magnesium foil
- 160: Separator
- 200, 200a-200e: Magnesium-air battery system
- 210: Supplier
- 220: Battery body
- 221: Paper filter
- 222: Beaker
- 223: Liquid electrolyte
- 224: Clip
- 225: Activated carbon
- 226: Copper mesh
- 227: Support
- 230: Wind-up reel
- 240: Driver
- 250: Cathode terminal
- 260: Anode
- 261: Conductive member
- 262: Activated carbon
- 263: Hollow tube
- 264: Fine pore
- 270: Carbon felt
- 280: Battery unit
- 290a, 290b: Block of battery units
- 300: Electric device
- 310: Housing
- 320: Insertion opening
- 330: Discharge opening
- 410, 420: Reel
- 500: Used fuel element
- 600: Large electric device
- 610: Housing
- 620: Insertion opening
- 630: Outlet opening
- 700: Resistor
- 800: Voltmeter

## Claims

1. A magnesium-air battery fuel element serving as a cathode in a magnesium-air battery that contains air as an anode active material and magnesium as a cathode active material, comprising:
a film, and
a magnesium film that is adhered on the film, wherein
a roll shape is formed by the film and the magnesium film.

2. The magnesium-air battery fuel element according to Claim 1, further comprising
a separator that covers the film and the magnesium film, wherein
a roll shape is formed with the film, the magnesium film, and the separator.

3. The magnesium-air battery fuel element according to Claim 1, wherein
the film is conductive, and
a roll shape is formed by the film, the magnesium film, and a permeable film covering the magnesium film and is permeable by oxygen or a hydroxyl group.

4. The magnesium-air battery fuel element according to Claim 1, wherein
the magnesium film is formed by a vapor deposition on the film.

5. A magnesium-air battery comprising:
the magnesium-air battery fuel element according to any one of Claims 1 to 4;
an anode using air as an anode active material;
an electrolyte located between the magnesium-air battery fuel element and the anode.

6. The magnesium-air battery according to Claim 5, further comprising
a carbon felt that is located between the magnesium-air battery fuel element and the anode, wherein
liquid electrolyte containing the dissolved electrolyte impregnates the carbon felt.

7. The magnesium-air battery according to Claim 6, wherein
a contact area between the anode and the carbon felt is larger than a contact area between the magnesium-air battery fuel element and the carbon felt.

8. The magnesium-air battery according to Claim 6 or Claim 7, wherein
the carbon felt is arranged on the magnesium-air battery fuel element.

9. The magnesium-air battery according to any one of Claims 5 to 8, wherein
the anode comprises a cube shaped conductive member and activated carbon housed in the conductive member.

10. The magnesium-air battery according to Claim 9, further comprising
the another anode is arranged under the magnesium-air battery fuel via the another carbon felt.

11. The magnesium-air battery according to any one of Claims 5 to 10, wherein
the anode comprises a hollow tube at an internal portion thereof in which the liquid electrolyte flows therewithin, and
the hollow tube includes pores to have the liquid electrolyte flowing within the hollow tube further flow across outside the hollow tube.

12. A method for producing a magnesium-air battery fuel element serving as a cathode in a magnesium-air battery that contains air as an anode active material and magnesium as a cathode active material, the method comprising the steps of:
adhering a magnesium film on a film; and
forming a roll shape with the film and the magnesium film.

13. A magnesium-air battery fuel system that uses air as an anode active material and magnesium as a cathode active material, and a magnesium-air battery fuel element serves as a cathode, comprising:
a supplier;
a battery body;
a wind-up reel; and
a driver; wherein
the magnesium-air battery fuel element is formed from a film, and a magnesium film adhered on the film to have a roll shape,
the supplier is connected to the magnesium-air battery fuel element and is rotatable with respect to a center, that is, a roll shaft of the connected magnesium-air battery fuel element, and the supplier delivers the magnesium-air battery fuel element to the wind-up reel via the battery body,
the battery body comprises an anode and an electrolyte, wherein the battery body uses the magnesium-air battery fuel element delivered from the supplier as a cathode and acts synergistically with the anode to generate electricity,
the wind-up reel winds a post-reaction magnesium-air battery fuel element of the magnesium-air battery fuel element used to generate electricity in the battery body, and forms a used fuel element having a roll shape that is removable from the wind-up reel, and
the driver rotationally drives the supplier and the wind-up reel.

14. The magnesium-air battery system according to Claim 13, wherein
the magnesium-air battery system is housed inside an electric device that receives an electricity supply,
the magnesium-air battery fuel element is inserted into an insertion opening formed in the electric device to connect to the supplier, and
the used fuel element is removable from the wind-up reel as the used fuel element is removed from an outlet formed on the electric device.

15. The magnesium-air battery system according to Claim 13 or Claim 14, further comprising
a plurality of blocks of battery units that comprises a plurality of battery units including the supplier, the battery body, and the wind-up reel, wherein
the driver is an electric motor that consumes electricity to rotationally drive the supplier and the wind-up reel in a block of battery units, wherein the electricity is generated by other remaining blocks of battery units.

16. A use method for a magnesium-air battery system that comprises a supplier, a battery body, a wind-up reel, and a driver, in which air is serving as an anode active material, magnesium is serving as a cathode active material, and a magnesium-air battery fuel element is used as a cathode, the method comprising the steps of:
connecting the magnesium-air battery fuel element formed into a roll shape with a film and a magnesium film adhered on the film;
delivering the magnesium-air battery fuel element connected to the supplier to the wind-up reel via the battery body as the supplier is rotationally driven by the driver;
generating electricity in the battery body including an anode and an electrolyte by using the magnesium-air battery fuel element delivered from the wind-up reel as a cathode acting in synergy with the anode;
forming a roll shaped used fuel element by winding a post-reaction magnesium-air battery fuel element of the magnesium-air battery fuel element used to generate electricity in the battery body on the wind-up reel; and
removing the used fuel element that is formed by the wind-up reel.
